# EUROPÄISCHE PATENTSCHRIFT

(11) **EP 1 278 018 B1**
(45) Veröffentlichungstag und Bekanntmachung des Hinweises auf die Patenterteilung: **29.11.2006**
(21) Anmeldenummer: 02015143.7
(22) Anmeldetag: 06.07.2002
(51) Int. Cl.: F24D 3/16

(54) **Abdeckelement**
Panel
Panneau

(30) Priorität: 17.07.2001 DE 20111854 U
(43) Veröffentlichungstag der Anmeldung: 22.01.2003
(73) Patentinhaber: Zehnder Verkaufs- und Verwaltungs AG, 5722 Gränichen (CH)
(72) Erfinder: Weschle, Hans-Peter, 77743 Neuried 1 (DE)
(74) Vertreter: Stenger, Watzke & Ring

(56) Entgegenhaltungen:
- EP-A- 0 733 865
- DE-A- 1 912 396
- DE-A- 2 035 936
- DE-C- 954 640
- DE-U- 20 103 146
- US-A- 5 799 723

## Beschreibung

Die Erfindung betrifft ein Abdeckelement zum Anbringen an einem mehrere von einem wärmeabgebenden Medium durchströmbare Rohre aufweisenden Plattenelement einer Deckenstrahlplatten-Heizung.

Deckenstrahlplatten-Heizungen werden zur Beheizung von Räumen mit einer Höhe von 3 m bis 30 m eingesetzt und erfordern neben niedrigen Investitionskosten nur geringe Betriebs- und Folgekosten. Darüberhinaus bedingt die Verwendung von Deckenstrahlplatten-Heizungen und der damit verbundene Verzicht auf ansonsten übliche Wandheizkörper, daß die Heizkörper bei der Nutzung der Räume nicht störend im Wege sind.

Bekannte Deckenstrahlplatten-Heizungen werden für gewöhnlich aus einzelnen Deckenstrahlplatten modulartig aufgebaut, wobei die Deckenstrahlplatten aus einem Plattenelement sowie an dem Plattenelement angeordneten, von einem wärmeabgebenden Medium durchströmbaren Rohren aufgebaut sind. Die einzelnen Rohre benachbarter Plattenelemente werden zum Aufbau der Deckenstrahlplatten-Heizung endseitig miteinander verbunden. Schließlich wird die so aufgebaute Deckenstrahlplatten-Heizung an ihren verbliebenen offenen Enden mit Anschlußstücken versehen, die wiederum an einen Zulauf bzw. an einen Ablauf für das wärmeabgebende Medium angeschlossen werden. Um insbesondere die Verbindungsbereiche zwischen zwei benachbarten Deckenstrahlplatten bzw. zwischen einem Anschlußstück und einer daran angrenzenden Deckenstrahlplatte zu verblenden, werden üblicherweise Abdeckelemente eingesetzt, welche an den Deckenstrahlplatten befestigt werden und sich über die oben genannten Bereiche hinaus erstrecken.

Diese Abdeckelemente werden im Stand der Technik mittels Schrauben oder Federn bzw. Schiebern an den Deckenstrahlplatten, vorzugsweise an den Plattenelementen, befestigt. Derartige Befestigungstechniken erfordern jedoch einen hohen Aufwand bei der Montage der Deckenstrahlplatten-Heizungen. So müssen im Falle von Schrauben als Befestigungsmitteln die Abdeckelemente vom Montagepersonal umständlich mit den bereits unter der Raumdecke montierten Deckenstrahlplatten verschraubt werden. Dies ist insbesondere deshalb schwierig, da das Montagepersonal aufgrund der Einbaulage der Deckenstrahlplatten-Heizung über Kopf arbeiten muß. Ähnliches gilt für die Verwendung von Federn bzw. Schiebern, wobei diese Elemente ebenso wie die Schrauben zusätzliche Bauteile bedeuten, die zum Aufbau der kompletten Deckenstrahlplatten-Heizung aufgewendet werden müssen.

Aus dem Stand der Technik sind darüber hinaus Abdeckelemente bekannt geworden, die nicht an einem Plattenelement an einer Deckenstrahlplatten-Heizung, sondern direkt am Rohrregister der Heizung anzuordnen sind. Ein solches Abdeckelement ist beispielsweise aus der DE 201 03 146 U1 bekannt geworden. Das hier beschriebene Abdeckelement besteht aus einer Stahlplatte aus Blech, die mittels aufgekanteter Ränder an zumindest einem von im Abstand voneinander angeordneten Rohren eines mit einem Heiz- bzw. Kühlmedium zu beaufschlagenden Rohrregisters zur Wärmeübertragung anliegt. Um ein ungewolltes Durchbiegen des die Stahlplatte tragenden Rohres zu verhindern, ist dieses mit einem in Längsrichtung des Rohres verlaufenden Steges versehen.

Ein weiteres an einem Heiz- bzw. Kühlregister einer Heiz- bzw. Kühlvorrichtung anzuordnendes Abdeckelement ist aus der DE 19 12 396 bekannt. Das hier beschriebene Abdeckelement besteht vorzugsweise aus einem Aluminiumblech, das zur Anordnung an den Rohren des Heiz- bzw. Rohrregisters über Einwölbungen verfügt, die die jeweiligen Rohre des Heiz- bzw. Kühlregisters teilweise umschließen. Zur Abdeckung eines von einer Einwölbung nicht umschlossenen Teilbereiches eines Rohres dienen Deckstreifen, die gewünschtenfalls mit den Längsrändern der Einwölbungen durch Löten verbunden sind.

In der DE 2 035 936 ist eine Deckenstrahlplatten-Heizung gezeigt, bei der der Übergangsbereich zwischen zwei benachbarten Platten mittels einer Stoßblende verdeckt wird. Die Stoßblende, welche aus flexiblem Material gefertigt ist, weist Verbindungsstrukturen in Form von Klemmfedern auf, die durch Aufclipsen an einer korrespondierenden Gegenstruktur an den Enden der Platten festlegbar sind.

Ausgehend von diesem Stand der Technik ist es **Aufgabe** der Erfindung, ein Abdeckelement der eingangs genannten Art dahingehend zu verbessern, daß es an den Deckenstrahlplatten auf einfachere Weise zu befestigen ist.

Zur **Lösung** dieser Aufgabe wird mit der Erfindung vorgeschlagen, daß das Abdeckelement aus einem flexiblen Material gefertigt ist, daß es eine Verbindungsstruktur aufweist, die durch Aufclipsen auf eine entsprechende an dem Plattenelement ausgebildete Gegenstruktur an dem Plattenelement festlegbar ist und daß es mindestens eine Sicke aufweist, die zumindest in einen Befestigungsabschnitt einen zu einer an dem Plattenelement ausgebildete Rohraufnahmesicke korrespondierenden Querschnitt aufweist, wobei der Querschnitt der Sicke in dem Abdeckelement sich in dem Befestigungsabschnitt zur offenen Seite der Sicke verjüngt.

Ein erfindungsgemäß ausgestattetes Abdeckblech ist aus einem flexiblen Material gefertigt, wobei in dem Abdeckblech bereits bei der Fertigung eine Verbindungsstruktur ausgebildet wird. Zur Aufmontage des Abdeckelements auf die Deckenstrahlplatte wird das Abdeckelement in denkbar einfacher Weise auf eine an der Deckenstrahlplatte vorgesehene Gegenstruktur aufgeclipst. Die an dem Abdeckelement ausgebildete Verbindungsstruktur hält auf der Gegenstruktur des Plattenelementes aufgrund der durch das flexible Material des Abdeckelementes ausgeübten Spannung. Es werden zur Festlegung des

Abdeckelementes keine weiteren Befestigungsmittel benötigt, und das Montagepersonal muß nach Zusammenfügen der Deckenstrahlplatten-Heizung aus den einzelnen Deckenstrahlplatten die Abdeckelemente lediglich durch Aufbringen einer Druckkraft mit den Verbindungsstrukturen auf die an den Plattenelementen ausgebildeten Gegenstrukturen aufclipsen. Dies geschieht zum einen ohne Werkzeug, und diese Arbeit ist problemlos auch über Kopf durchführbar.

Das Abdeckelement weist vorzugsweise in zwei Bereichen die Verbindungsstruktur auf, so daß es an zwei benachbarten Plattenelementen festlegbar ist, wobei das Abdeckelement in seinem montierten Zustand den zwischen zwei benachbarten Plattenelementen ausgebildeten Verbindungsbereich überdeckt. Das Abdeckelement kann somit auf die oben beschriebene Weise sehr einfach durch Aufclipsen an den beiden benachbarten Plattenelementen befestigt werden, und der zwischen den Plattenelementen ausgebildete Verbindungsbereich, in dem die von einem wärmeabgebenden Medium durchströmbaren Rohre der einzelnen Deckenstrahlplatten miteinander verbunden sind, wird überdeckt.

Gemäß einem weiteren Merkmal der Erfindung kann in dem Abdeckelement mindestens eine Sicke ausgebildet sein, die zumindest in einem Befestigungsabschnitt einen zu einer in dem Plattenelement ausgeformten Rohraufnahmesicke korrespondierenden Querschnitte aufweist, wobei der Querschnitt der Sicke im Abdeckelement sich im Befestigungsabschnitt zur offenen Seite verjüngt. In einer derartigen Ausführung wird das Abdeckelement mit der im Befestigungsabschnitt verjüngt ausgebildeten Sicke über die Rohraufnahmesicke geführt, wobei der verjüngte Abschnitt der in dem Befestigungsabschnitt des Abdeckelementes ausgebildeten Sicke die Rohraufnahmesicke umgreift. Dadurch wird infolge der Materialspannung des flexiblen Materials des Abdeckelementes eine Clipeffekt erzielt.

Eine einfache Ausgestaltung der Sicke ergibt sich, wenn diese im wesentlichen teilkreisförmig ausgeführt ist, wobei sie zumindest in dem Befestigungsabschnitt des Abdeckelementes einen Teilkreis umschließt, der größer als ein Halbkreis ist. Die solchermaßen ausgeführte Sicke kann in einfacher Weise über eine korrespondierende Rohraufnahmesicke in dem Plattenelement geführt und in dem zumindest einen Befestigungsabschnitt auf eine ebenfalls mehr als einen Halbkreis umschließende teilkreisförmige Rohraufnahmesicke aufgeclipst werden.

Um mit dem erfindungsgemäßen Abdeckelement einen Verbindungsbereich zwischen zwei benachbarten Deckenstrahlplatten zuverlässig abdecken zu können, in dem verschiedenartige Verbindungstechniken der aufeinander treffenden Rohrenden zur Anwendung kommen, ist es von Vorteil, wenn die Sicken in dem Abdeckelement zwei einander gegenüberliegende Befestigungsabschnitte aufweisen, zwischen denen sich ein Zwischenabschnitt mit vergrößertem Querschnitt erstreckt. Auf diese Weise können beispielsweise auch Rohrverschraubungen mit über den Durchmesser des Rohres hinausragenden Schrauben bzw. Muttern zuverlässig abgedeckt werden.

Zum besseren Halt des erfindungsgemäßen Abdeckelementes wird vorgeschlagen, daß dieses im aufgeclipsten Zustand in seinen Seitenbereichen das Plattenelement hintergreift. Hierzu kann beispielsweise ein doppelt umgebogener Seitenbereich vorgesehen sein, der an einem entsprechend ausgeformten Seitenbereich des Plattenelementes festlegbar ist. Auch diese zusätzliche Absicherung erfolgt über einen Clipeffekt, da die zum Hintergreifen umgeformten Seitenbereiche des Abdeckelements aufgrund der Elastizität des Materials des Abdeckelements flexibel federn beispielsweise nach außen zurückgelegt werden können. In der Montagestellung gelangen die elastisch ausgelenkten Seitenbereiche in ihre Ruhestellung zurück und erzielen somit einen zusätzlichen Halt, indem sie das Plattenelement hintergreifen.

Schließlich ist es zu bevorzugen, das Abdeckelement aus einem Metallblech zu fertigen, da Metall im allgemeinen eine vergleichsweise hohe Wärmeleitfähigkeit aufweist, wodurch die von dem in den Rohren geführten wärmeabgebenden Medium an die Rohre und darüber an das Plattenelement abgegebene Wärme effizient auf das Abdeckelement übertragen und von diesem abgestrahlt bzw. über Konvektion abgegeben werden kann. Hierbei sind Metalle mit hoher Wärmeleitfähigkeit zu bevorzugen, wie beispielsweise Kupfer, Aluminium oder ein Stahl mit entsprechend hoher Wärmeleitfähigkeit.

Weitere Merkmale und Vorteile der Erfindung ergeben sich aus der nachfolgenden Beschreibung eines Ausführungsbeispiels anhand der beigefügten Figuren. Dabei zeigen:
- Fig. 1: eine Ansicht eines Ausführungsbeispiels eines erfindungsgemäßen Abdeckelements,
- Fig. 2: eine Seitenansicht des Abdeckelements aus Fig. 1,
- Fig. 3: eine entlang der in Fig. 1 mit III-III bezeichnete Linie genommene Schnittdarstellung des Abdeckelementes,
- Fig. 4: eine entlang der in Fig. 1 mit IV-IV bezeichneten Schnittlinie genommene Schnittdarstellung des Abdeckelements,
- Fig. 5: in Schnittdarstellung ein Plattenelement, auf welche das Abdeckelement aus Fig. 1 aufclipsbar ist,
- Fig. 6: das Plattenelement aus Fig. 5 mit darin befindlichen Rohren und aufgeclipstem Abdeckelement im Schnitt und
- Fig. 7: in vergrößerter Darstellung den in Fig. 6 mit VII bezeichnete Bereich.

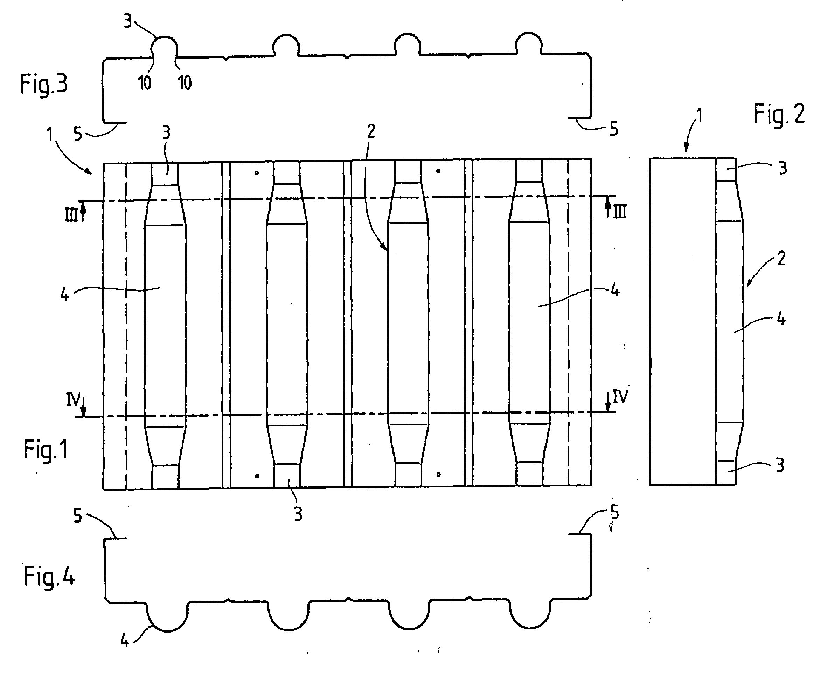

In den Fig. 1 bis 4 ist in verschiedenen Ansichten ein Ausführungsbeispiel eines erfindungsgemäßen Abdeckelementes 1 gezeigt. Das Abdeckelement 1 weist in diesem Beispiel vier parallel verlaufende Sicken 2 auf, welche an ihren Enden jeweils einen Befestigungsabschnitt 3 aufweisen, der unter konischer Erweiterung in einen die beiden Befestigungsabschnitte 3 verbindenden Zwischenabschnitt 4 der Sicke 2 übergeht. Der Zwischenabschnitt 4 weist dabei, wie in Fig. 4 gezeigt, einen im wesentlichen halbkreisförmigen Querschnitt auf, wohingegen die Befestigungsabschnitte 3 einen im wesentlichen teilkreisförmigen Querschnitt aufweisen, der mehr als einen Halbkreis umschließt. Dadurch werden in dem Befestigungsabschnitt 3 der Sicke 2 Vorsprünge 10 ausgebildet, die, wie dies später erläutert wird, zum Befestigen des Abdeckelementes 1 auf einem Plattenelement dienen. Weiterhin ist zu erkennen, daß die Seitenbereiche des Abdeckelementes 1 zweifach senkrecht umgelenkt verlaufen, so daß sie schließlich jeweils in einem nach innen umgelenkten, sich parallel zur Ebene der Sicken erstreckende Abschnitt 5 münden.

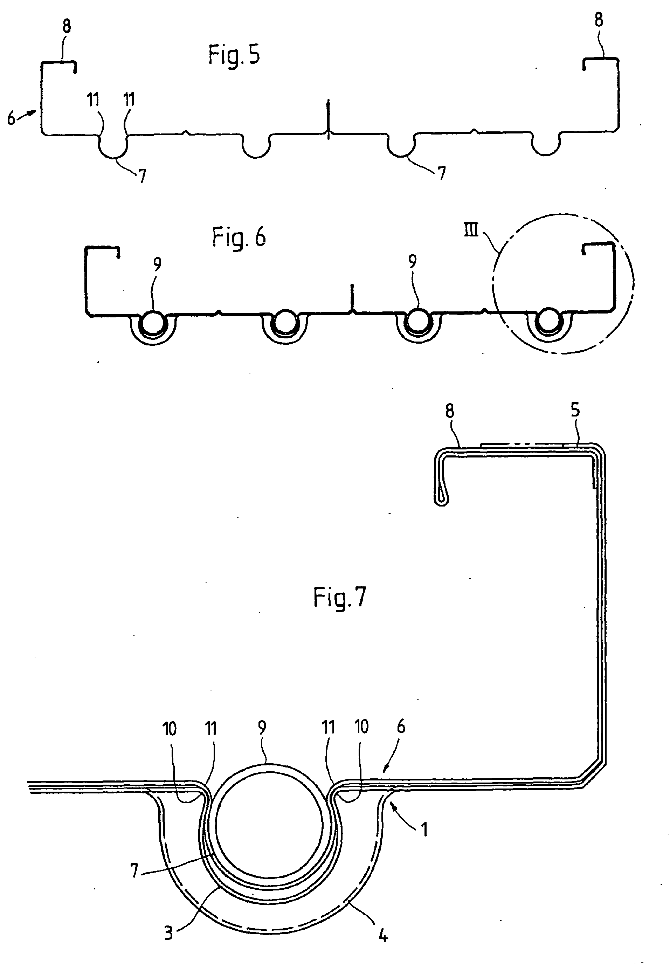

In Fig. 5 ist ein Plattenelement gezeigt, auf welches das in den Fig. 1 bis 4 gezeigte Abdeckelement 1 aufgeclipst werden kann. Das hier im Schnitt gezeigte Plattenelement 6 weist vier parallel zueinander verlaufende Rohraufnahmesicken 7 auf, welche ebenfalls teilkreisförmig ausgebildet sind, wobei sie sich über mehr als einen Halbkreis erstrecken. Dadurch sind auch bei diesen Sicken Vorsprünge 11 ausgebildet, welche ein in eine dieser Rohraufnahmesicken 7 eingedrücktes Rohr nach Art einer Clipverbindung zurückhalten. Die Seitenbereiche des Plattenelementes 6 sind ebenfalls zweifach rechtwinklig umgelenkt, so daß sich auch hier jeweils ein nach innen gerichteter, sich parallel zur Ebene der Sicken 7 erstreckender Abschnitt 8 ergibt.

In den Fig. 6 sowie 7 ist schließlich in Schnittdarstellung gezeigt, wie das erfindungsgemäße Abdeckelement 1 auf ein mit Rohren 9 bestücktes Plattenelement 6 aufgeclipst befestigt ist. Zu erkennen ist, daß die Rohre 9 durch die von der Rohraufnahmesicke 7 des Plattenelementes 6 ausgebildeten Vorsprünge 11 in der Sicke 7 zurückgehalten werden. An der Rohraufnahmesicke 7 greift der Befestigungsabschnitt 3 der in dem Abdeckelement 1 ausgebildeten Sicke an. Die Vorsprünge 10 des Abdeckelementes 1 greifen an dem Plattenelement 6 im Bereich der durch die Rohraufnahmesicken 7 ausgebildeten Vorsprünge 11 an, und erzeugen aufgrund der Materialspannung des flexiblen Materials eine Klemmwirkung. Durch diese Klemmwirkung wird das Abdeckelement 1 gehalten.

Zusätzlichen Halt erfährt das Abdeckelement 1 dadurch, daß der an dem Abdeckelement 1 ausgebildete Abschnitt 5 das Plattenelement 6 an dessen Abschnitt 8 hintergreift. Zum Befestigen des Abdeckelementes an dem Plattenelement werden die senkrecht umgelenkten Seitenbereiche des Abdeckelementes nach außen gezogen, und es wird der Befestigungsabschnitt 3 der Sicke 2 in dem Abdeckelement 1 nach Art eines Aufclipsens über die Rohraufnahmesicke 7 des Plattenelementes 6 geführt. Die Stelle, an der die Rohraufnahmesicke 7 ihre größte Breite aufweist, ist dabei breiter, als der Abstand zwischen den Vorsprüngen 10 des Aufnahmebereichs 3. Aufgrund der Flexibilität des Materials des Abdeckelements 1 werden die beiden Vorsprünge 10 auseinandergepreßt, wobei sie ihren ursprünglichen Abstand beim Überschreiten des Punktes an der Rohraufnahmesicke mit den größten Außenabmessungen wieder einnehmen. Schließlich liegen die Vorsprünge 10 des Abdeckelementes 1 an den Vorsprüngen 11 der Rohraufnahmesicke an, und das Abdeckelement ist aufgeclipst. In dieser Stellung werden die seitlich auseinander gezogenen, umgelenkten Abschnitte des Abdeckelementes 1 losgelassen, so daß sie in die in Fig. 7 gezeigte Stellung zurückkehren und das Plattenelement 6 an dem Abschnitt 8 hintergreifen. Dies sorgt für eine zusätzlich Sicherung der Befestigung der Abdeckung.

Die Abdeckung wird dabei an zwei benachbarten Plattenelementen 6 festgelegt, so daß sie den dazwischen liegenden Verbindungsbereich überdeckt. Zum Überdecken des Anschlußbereiches eines Plattenelementes an eine Zu- bzw. Abführleitung für das wärmeabgebende Medium, ist es denkbar, ein verkürztes Abdeckelement zu verwenden, welches lediglich an dem letztgenannten Plattenelement festgelegt wird und über den Anschlußbereich hinausragt, um diesen zu überdecken.

Das hier gezeigte Abdeckelement ist dabei vorzugsweise aus einem Metall mit guter Wärmeleitfähigkeit hergestellt. Zur Herstellung ist es zu bevorzugen, das Abdeckelement ausgehend von einem Metallblech durch Umformen, vorzugsweise Biegeumformen, zu bilden.

Das beschriebene Abdeckelement kann auf einfache Weise montiert werden und ist zum Überdecken von Verbindungsbereichen mit verschiedensten Verbindungsarten für die Rohrverbindungen geeignet.

Das beschriebene Ausführungsbeispiel soll nicht beschränkend verstanden werden.

### Bezugszeichenliste

- 1.: Abdeckelement
- 2.: Sicke
- 3.: Befestigungsabschnitt
- 4.: Zwischenabschnitt
- 5.: Abschnitt
- 6.: Plattenelement
- 7.: Rohraufnahmesicke
- 8.: Abschnitt
- 9.: Rohr
- 10.: Vorsprung
- 11.: Vorsprung

## Patentansprüche

1. Abdeckelement zum Anbringen an einem mehrere von einem wärmeabgebenden Medium durchströmbare Rohre (9) aufweisenden Plattenelement (6) einer Deckelstrahlplatten-Heizung, wobei
das Abdeckelement (1) aus einem flexiblen Material gefertigt ist und Verbindungsstrukturen aufweist, die durch Aufclipsen an einer korrespondierenden, an dem Plattenelement ausgebildeten Gegenstruktur festlegbar sind, **dadurch gekennzeichnet, daß** das Abdeckelement (1) mindestens eine Sicke (2) aufweist, die zumindest in einem Befestigungsabschnitt (3) einen zu einer an dem Plattenelement (6) ausgebildete Rohraufnahmesicke (7) korrespondierenden Querschnitt aufweist, wobei der Querschnitt der Sicke (2) an dem Abdeckelement (1) sich in dem Befestigungsabschnitt (3) zur offenen Seite der Sicke (2) verjüngt.

2. Abdeckelement nach Anspruch 1, **dadurch gekennzeichnet, daß** es zum Festlegen an zwei benachbarten Plattenelementen (6) in zwei Bereichen Verbindungsstrukturen aufweist, wobei das Abdeckelement im montierten Zustand einen zwischen den beiden Plattenelementen (6) ausgebildeten Verbindungsbereich überdeckt.

3. Abdeckelement nach einem der voranstehenden Ansprüche, **dadurch gekennzeichnet, daß** die in dem Abdeckelement (1) ausgebildete Sicke (2) einen im wesentlichen teilkreisförmigen Querschnitt aufweist, der in dem Befestigungsabschnitt (3) einen Kreisabschnitt umschließt, der größer als ein Halbkreis ist.

4. Abdeckelement nach einem der Ansprüche 1 oder 2, **dadurch gekennzeichnet, daß** die Sicke (2) zwei Befestigungsabschnitte (3) aufweist, wobei sich zwischen den Befestigungsabschnitten (3) ein Zwischenabschnitt (4) mit vergrößertem Querschnitt erstreckt.

5. Abdeckelement nach einem der vorhergehenden Ansprüche, **dadurch gekennzeichnet, daß** an dem Abdeckelement (1) ausgebildete Seitenbereiche das Plattenelement (6) hintergreifen.

6. Abdeckelement nach einem der voranstehenden Ansprüche, **dadurch gekennzeichnet, daß** es aus einem Metallblech gefertigt ist.

## Claims

1. Cover element for attachment to a plate element (6) of a ceiling radiator plate heating system, the said plate element having a plurality of pipes (9) through which a heat-emitting medium can flow, wherein the cover element is produced from a flexible material and has connecting structures which can be secured by clipping on to a corresponding counterpart structure constructed on the plate element, **characterised in that** the cover element (1) has at least one bead (2) which has at least in a fixing portion (3) a cross-section which corresponds to a pipe-receiving bead (7) constructed on the plate element (6), wherein the cross-section of the bead (2) on the cover element (1) tapers in the fixing portion (3) towards the open side of the bead (2).

2. Cover element as claimed in Claim 1, **characterised in that** for securing on two adjacent plate elements (6) it has connecting structures in two regions, wherein in the assembled state the cover element covers a connecting region formed between the two plate elements (6).

3. Cover element as claimed in any one of the preceding claims, **characterised in that** the bead (2) constructed in the cover element (1) has a substantially partially circular cross-section which in the fixing portion (3) encloses a portion of a circle which is greater than a semicircle.

4. Cover element as claimed in any one of Claims 1 and 2, **characterised in that** the bead (2) has two fixing portions (3), wherein an intermediate portion (4) with an enlarged cross-section extends between the fixing portions (3).

5. Cover element as claimed in any one of the preceding claims, **characterised in that** side regions formed on the cover element (1) engage behind the plate element (6).

6. Cover element as claimed in any one of the preceding claims, **characterised in that** it is made from a metal sheet.

## Revendications

1. Panneau destiné à être posé sur un élément de plaque (6) présentant plusieurs tuyaux (9) qui peuvent être parcourus par un fluide dégageant de la chaleur dans un chauffage à panneaux rayonnants, dans lequel
le panneau (1) est fait d'un matériau flexible et présente des structures d'assemblage qui peuvent être clipsées sur une structure opposée correspondante formée sur l'élément de plaque,
**caractérisé en ce que** le panneau (1) présente au moins une moulure (2) qui possède au moins dans une partie de fixation (3) une section correspondant à une moulure (7) recevant un tuyau formée sur l'élément de plaque (6), la section de la moulure (2) sur le panneau (1) se resserrant dans la partie de fixation (3) vers le côté ouvert de la moulure (2).

2. Panneau selon la revendication 1, **caractérisé en ce qu'**il possède des structures d'assemblage dans deux zones pour la fixation sur deux éléments de plaque (6) voisins, le panneau à l'état monté recouvrant une zone d'assemblage formée entre les deux éléments de plaque (6).

3. Panneau selon l'une des revendications précédentes, **caractérisé en ce que** la moulure (2) formée dans le panneau (1) a une section sensiblement en forme de partie de cercle, qui couvre dans la partie de fixation (3) un segment de cercle plus grand qu'un demi-cercle.

4. Panneau selon l'une des revendications 1 ou 2, **caractérisé en ce que** la moulure (2) présente deux parties de fixation (3), avec entre les parties de fixation (3) une partie intermédiaire (4) de plus grande section.

5. Panneau selon l'une des revendications précédentes, **caractérisé en ce que** des parties latérales formées sur le panneau (1) passent derrière l'élément de plaque (6).

6. Panneau selon l'une des revendications précédentes, **caractérisé en ce qu'**il est fait d'une tôle métallique.
